# EUROPÄISCHE PATENTSCHRIFT

(11) **EP 1 336 687 B1**
(45) Veröffentlichungstag und Bekanntmachung des Hinweises auf die Patenterteilung: **13.05.2009**
(21) Anmeldenummer: 03002421.0
(22) Anmeldetag: 05.02.2003
(51) Int. Cl.: D21G 1/00, B32B 37/00

(54) **Flächenkalander und Flächenkalandrierverfahren**
Surface calender and a method for surface calendering
Calandre de surface et un procédé pour calandrage de surface

(30) Priorität: 15.02.2002 DE 10206256
(43) Veröffentlichungstag der Anmeldung: 20.08.2003
(73) Patentinhaber: Beiersdorf AG, 20245 Hamburg (DE)
(72) Erfinder: Schreiber, Jens, 21337 Lüneburg (DE)

(56) Entgegenhaltungen:
- DE-U- 6 602 966
- US-A- 4 069 081
- US-A- 5 928 454
- US-A- 6 164 360

## Beschreibung

Die Erfindung umfasst ein Flächenkalander und -verfahren zur flächigen Laminierung oder Kaschierung von Trägermaterialien wie beispielsweise Gewebe, Vlies oder Folien, insbesondere zur Herstellung von Verbandstoffen, die mit hotmelt-Selbstklebemassen beschichtet sind.

Das Kalandern ist eine pressende und walzende Bearbeitung von Trägermaterialien, wie beispielsweise Papier, Kautschuk oder Folien, zur Appretur oder Appretur-Nachbehandlung von Gewebe, Gewirke, Vlies oder Folien. Ein Kalander ist zudem einsetzbar zum Kaschieren oder Laminieren von Materialien. Zwischen zwei Walzen wird ein bahnförmiges Material eingeführt oder es werden mehrere Materialien zusammengeführt und zwischen den Walzen behandelt bzw. bearbeitet. Die bahnförmigen Materialien (Träger) können zudem mit weiteren Materialien beschichtet sein.
Man unterscheidet zwischen dem Kalandern, Laminieren, Kaschieren und Beschichten von Trägermaterialien. Unter Kaschieren wird das Verbinden zweier Trägermaterialien unter Einwirkung geringen bis mittleren Drucks verstanden. Es erfolgt ein Auflegen, Abdecken der Materialien. Unter Laminieren wird das Verbinden zweier Trägermaterialien unter Einwirkung meist höheren Drucks verstanden. Beim Kalandern sind meist hohe Kräfte/Drücke erforderlich um die Eigenschaften des Materials durch mechanisch Einwirkung zu verändern. Beschichten bedeutet das Auftragen/Auflegen von Fluiden, Pasten und/oder Materialbahnen auf einen Träger in Form von Ausstreichen, Gießen, Aufsprühen, Aufwalzen, Auspressen oder dergleichen.
Für das Kalandern, Kaschieren oder Laminieren kann eine im Prinzip identische Technik verwendet werden, so dass gleichbedeutend vom Kalander, Kaschierwerk oder Laminierwerk gesprochen wird. Beim Kalandern, Laminieren oder Kaschieren, zu dem auch die vorliegende Erfindung zählt, werden zwei Trägermaterialen, von denen eins oder beide mit Fluiden beschichtet sein können, laminiert bzw. kaschiert.

Das Kalandern erfolgt üblicherweise durch einen Linienkontakt zwischen den Walzen. Bekannte einfache Kalander- oder Laminierwerke bestehen im Grunde aus zwei Walzen.

Durch die Anordnung mehrerer Walzen entstehen zwar Mehrfachkalander, wobei jedoch nur eine linienförmige Berührung zwischen zwei Walzen gegeben ist. Beim Bearbeitungsprozeß durch Kalandern, auch Kalandrieren genannt, wird die Ware in definierter Bahn zwischen den Kalanderwalzen hindurchgeführt. Durch Spalt- oder Krafteinstellung zwischen dem Walzenpaar, Temperierung der Walzen, Vorwärmung der Laminatbestandteile oder Variation der Walzenantriebsgeschwindigkeiten wird das Kalanderergebnis individuell beeinflusst. Dies führt u.a. zu bestimmten Dicken-, Dichteoder Transparenzwerten oder Oberflächeneffekten der kalandrierten Ware.

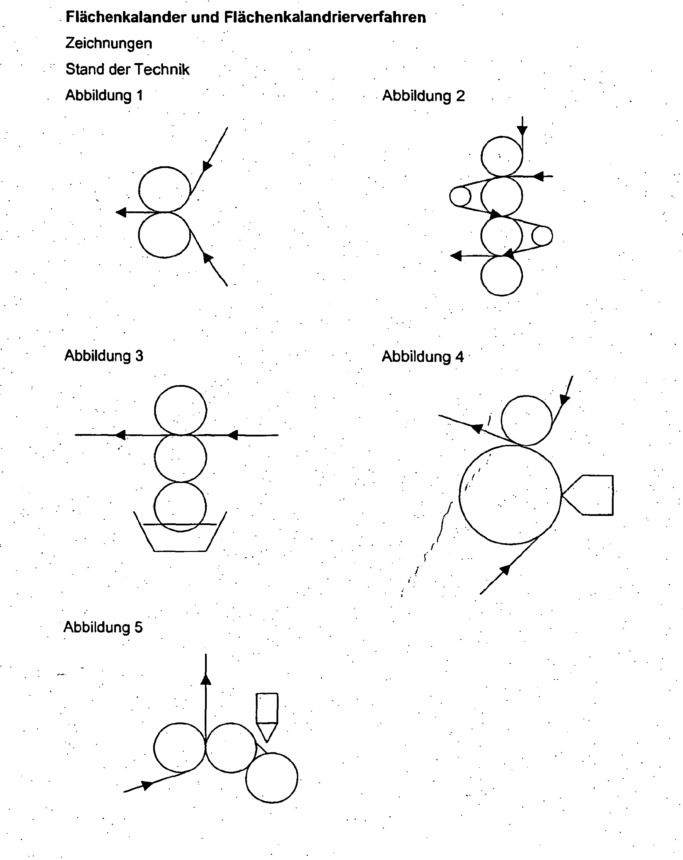

Die Abbildungen 1 und 2 veranschaulichen das Prinzip des Zweiwalzenkalander (Abbildung 1) und des Mehrfachkalander (Abbildung 2) wie er aus dem Stand der Technik bekannt ist.

Abbildung 1 skizziert einen Zweiwalzenkalander, wobei die zwei Träger zwischen zwei Walzen durchgeführt werden. Abbildung 2 zeigt einen Mehrfachwalzenkalander, wobei die Träger durch Umlenkwalzen hintereinander zwischen je zwei Walzen durchgeführt werden.

Die in der Papier-, Druck- und Textilindustrie herkömmlich verwendeten Beschichtungsverfahren in Verbindung mit Kalander und Kalandrierverfahren sind in den Abbildungen 3, 4 und 5 skizziert. Die dargestellten Kalander und Kalandrierverfahren finden auch ohne eine vorangehende Beschichtung Anwendung im Stand der Technik. Wesentlich ist, dass alle bekannten Vorrichtungen und Verfahren auf dem Prinzip des "Linien-Kontaktes" basieren. So zeigt Abbildung 3 einen Kaschier-/ Laminierprozeß über Gravur-, Raster- oder Glattwalze gegen eine Kalanderwalze. Abbildung 4 zeigt einen Kaschier-/ Laminierprozeß über eine Beschichtungswalze gegen eine Kalanderwalze. Abbildung 5 zeigt einen Kaschier-/ Laminierprozeß über ein Walzenauftragswerk gegen eine Kalanderwalze.

DE 19547164 C1 beschreibt einen Kalander für die Behandlung einer Papierbahn. Der Kalander besteht aus mehreren Walzen, einer Oberwalze, mehreren Zwischenwalzen und einer Endwalze, die als Walzenstapel angeordnet sind. Durch Umlenkwalzen durchläuft die Papierbahn den jeweiligen Walzenspalt zweier Walzen. Die dargestellten Ausführungsformen ergeben immer einen Linienkontakt als Behandlungszone zwischen den Walzen. Die Oberflächengüte der Papierbahn lässt sich über die Rauhigkeit der Walzenoberfläche, der Temperatur, der Druckspannung im Walzenspalt und der Spaltbreite variieren.

WO 01/68019 A1 offenbart eine Anordnung zur Herstellung von dehnbare Verschlüssen. Dabei wird die dehnbare Materialbahn um eine temperierbare Walze geführt und im Walzenspalt mit einer zweiten Walze laminiert. Eine Laminierung über den Umfang der temperierbaren Walze findet nicht statt.

GB 2006109 beschreibt das Laminieren von Metall, vornehmlich Aluminium, mittels eines Kalanders, wobei auch hier das Laminieren zwischen zwei Walzen im Linienkontakt erfolgt.

Auch die Druckschriften DE 10005306 C1, DE 19945780 C1, DE 10010772 C1, DE 19820087 A1 und DE 19631056 A1 offenbaren Kalanderanordnungen, bei der die zu laminierenden oder auch zu beschichtenden Trägerbahnen durch einen Linienkontakt zweier Kalanderwalzen bearbeitet werden. Die Bearbeitungsparameter sind dabei u.a. immer der Walzenspalt und der Walzendruck innerhalb des Linienkontaktspalts.

US 6164360, offenbart einen Flächenkalander zur Behandlung von mindestens zwei Trägerbahnen (32, 34, 36), bestehend aus mindestens einer Trägerbahnzuführwalze (14), einer Trägerbahnabführwalze (18) und einer Kontaktwalze (16), wobei die Walzen so angeordnet sind, dass
- ein flächiger Kontakt der Trägerbahnen mit der Walze (16) resultiert (D1 Fig. 1) und
- die Trägerbahnen durch einen Spalt (20), gebildet zwischen der Trägerbahnzuführwalze (14) und der Kontaktwalze (16), um die Kontaktwalze herum durch den Spalt (22), gebildet zwischen der Kontaktwalze und der Abführwalze (18), geführt werden.

Um Einfluss auf die Eigenschaften der kalandrierten Trägermaterialien zu gewinnen, wird traditionell die am Kalanderlinienspalt erfolgende Profileinstellung durch lokales Ändern des Durchmessers der Metallwalze oder des Spaltdruckes und/oder durch den Einsatz sog. durchbiegungseinstellbaren Walzen durchgeführt, mittels welcher sich das Spaltkraftprofil auf gewünschte Weise einstellen lässt, was wiederum zu Änderungen der Oberflächeneigenschaften des kalandrierten Trägers führt.

Bekannt ist ebenfalls das vollflächige oder partielle Auftragen von Beschichtungsstoffen, wie z.B. Fluide, insbesondere hotmelt-Selbstklebemassen, auf Trägermaterialien durch Zweiwalzen- oder Mehrfachwalzenkalander. Bei der partiellen Auftragung von Beschichtungsstoffen ist jedoch eine dauerhafte Verformung des partiell aufgetragenen Stoffes durch den Linienkontakt beim üblichen Kalandrieren nicht möglich.

Bei allen bekannten Kalandrierverfahren besteht zwischen den Trägermaterialien und Beschichtungsstoffen zwischen zwei Walzen nur ein Linienkontakt. Nachteilig an dieser Verfahrensweise ist die relativ kurze Kontaktzeit zwischen Träger und dem Auftragmedium, das eine zweite Trägerbahn (Laminieren) und/oder ein Fluid (Beschichten) sein kann. Bei einem offenen Träger, wie z.B. Gewebe oder Flies, besteht dabei nachteilig die Möglichkeit entweder keinen ausreichenden Verbund der Materialien zu erzeugen oder eine vollständige Penetration des Fluids durch den Träger zu erhalten. Beides ist unerwüscht. Weiterhin nachteilig bei den bekannten Kalandern mit Linienkontakt ist der geringe Einfluss der Walzen auf die Temperatur im Laminat während des Laminier-, Kaschierprozesses.

Eine Aufgabe der vorliegenden Erfindung ist es, die Nachteile des Standes der Technik zu beseitigen. Insbesondere ist es die Aufgabe der vorliegenden Erfindung, die Verankerung und den Verbund der zu laminierenden bzw. zu kaschierenden Materialien zu erhöhen. Weitere Aufgaben des erfindungsgemäßen Kalanders und Kalandrierverfahrens sind:
- die Steuerung der Eindringtiefe eines Materials mit Bestandteilen, die während des Kalanderns fließfahig sind (z.B. erwärmte hotmelt-Selbsthaftklebemasse auf einer Materialbahn) in eine andere Materialbahn
- die Vermeidung vollständiger Durchdringung eines während des Kalanderns fließfähigen Materialbestandteiles in eine Materialbahn (Penetration)
- die Verwendung von sehr "offenen" Kaschiermaterialien (offenporige, weitmaschige, gelochte, allgemein partiell durchlässige bahnförmige Materialien) beim Kalandern zu ermöglichen
- die Einwirkung der Temperierung und/oder der/des Kraft/Druckes auf die zu kalandrierenden Materialbahnen während des Kaschier-/Laminiervorganges zu erhöhen
- den während des Kaschier-/Laminierprozesses erreichten Zustand noch vor Austritt aus dem Kalandern zu stabilisieren
- einen vorteilhaften Einfluss auf die Oberflächengüte und -gestalt von Trägermaterialien auszuüben.
Weiterhin ist es die Aufgabe der vorliegenden Erfindung die Prozeßgeschwindigkeit beim Kaschieren/Laminieren zu erhöhen und insbesondere Einsparpotentiale bei der Prozeßenergie und den Anlageninvestitionen zu generieren.

Gelöst werden diese Aufgaben durch ein Flächenkalander gemäß dem Hauptanspruch. Gegenstand der Unteransprüche sind vorteilhafte Ausführungsformen des erfindungsgemäßen Kalanders. Des weiteren umfasst die Erfindung ein Kalandrierverfahren zum flächigen Laminieren, Kaschieren von Trägerbahnen.

Es war überraschend und für den Fachmann, nicht vorauszusehen, dass zur Behandlung von mindestens zwei bahnförmigen Trägermaterialien ein Flächenkalander, umfassend mindestens eine Trägerbahnzuführwalze, eine Trägerbahnabführwalze und eine Kontaktwalze, wobei die zwei Trägerbahnen durch einen ersten Spalt, gebildet zwischen der Trägerbahnzuführwalze und der Kontaktwalze, um die Kontaktwalze herum durch einen zweiten Spalt, gebildet zwischen der Kontaktwalze und der Trägerbahnabführwalze, geführt werden, wobei der erste Spalt und/oder der zweite Spalt über die Walzenposition der Trägerbahnzuführwalze und/oder Trägerbahnabführwalze derart veränderbar sind, dass es im ersten Spalt und/oder zweiten Spalt zu einem Linienkontakt oder zu keinem Linienkontakt der zu behandelnden Trägerbahnen kommt und die Trägerbahnzuführwalze und/oder Trägerbahnabführwalze so angeordnet sind, dass ein flächiger Kontakt der Trägerbahnen mit der Kontaktwalze resultiert, die Aufgaben vollständig und zufriedenstellend löst.

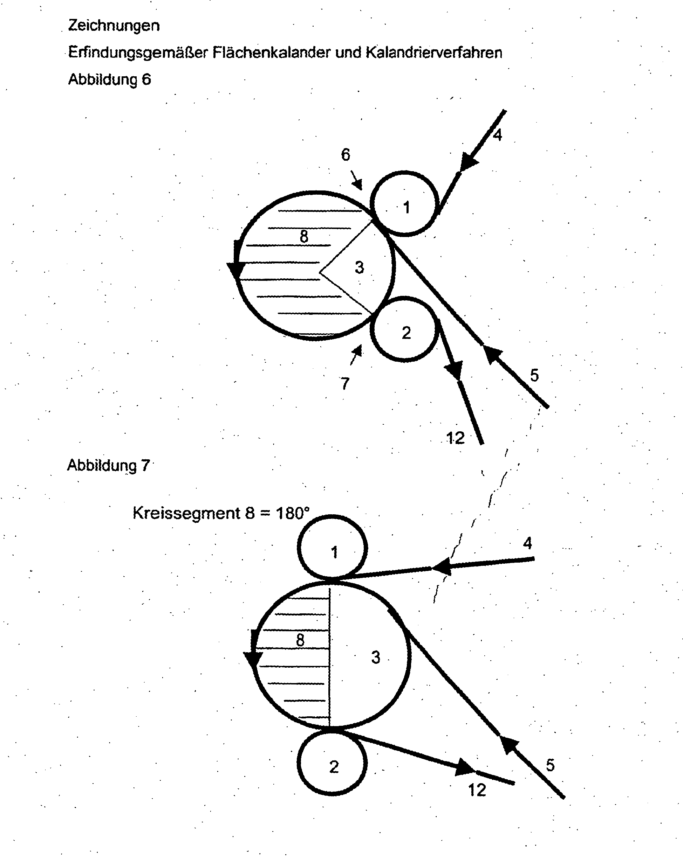

Zu besseren Erläuterung des erfindungsgemässen Kalanders und Kalandrierverfahrens stellen die Abbildungen 6 bis 11 besondere Ausführungsformen dar.
- Abbildung 6:: einfacher Flächenkalander mit Trägerbahnen (4, 5), Zuführ- (1), Abführ-(2) und Kontaktwalze (3 ), das Kreissegment (8) umspannt einen Winkel von >180°

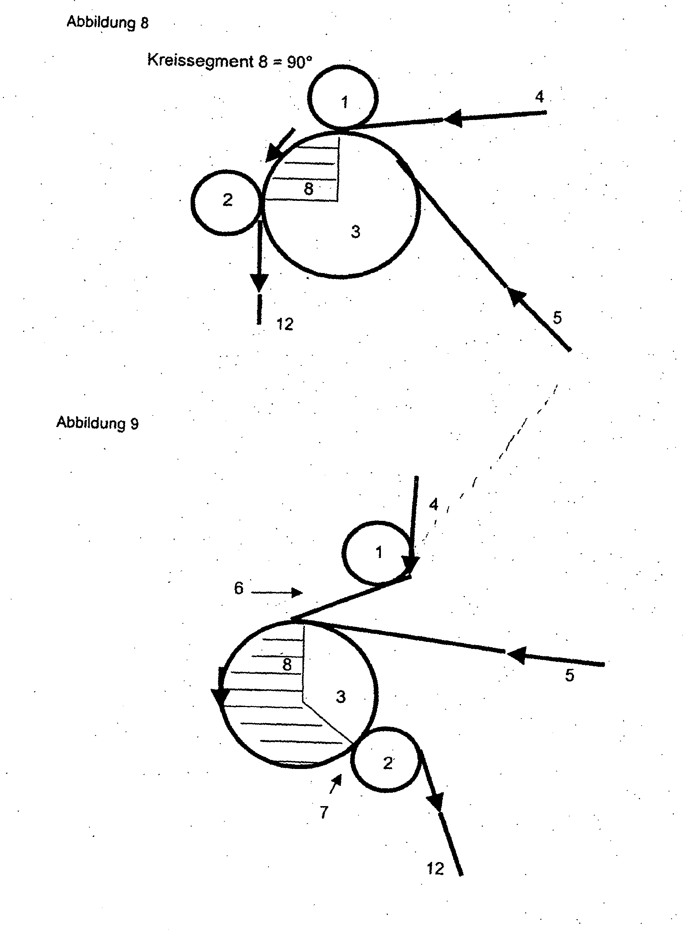

- Abbildung 7, 8:: Flächenkalander mit verschiedenen Winkelbereichen des Kreissegmentes (8) an der Kontaktwalze (3).
- Abbildung 9:: Flächenkalander ohne Linienkontakt zwischen Walze 1 und Walze 3

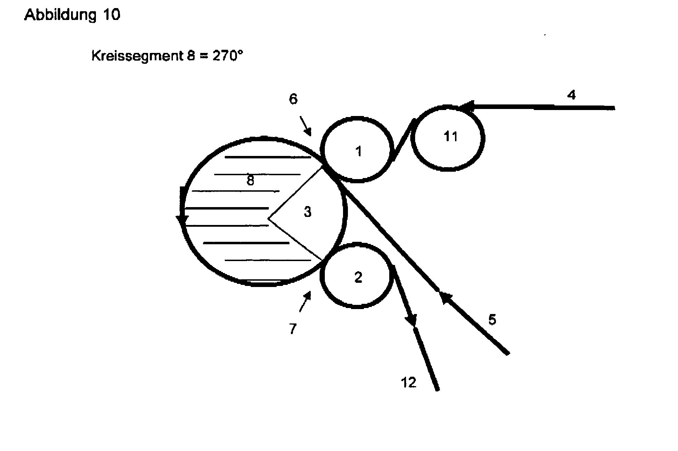

- Abbildung 10:: Flächenkalander mit Umlenkwalzen (11)

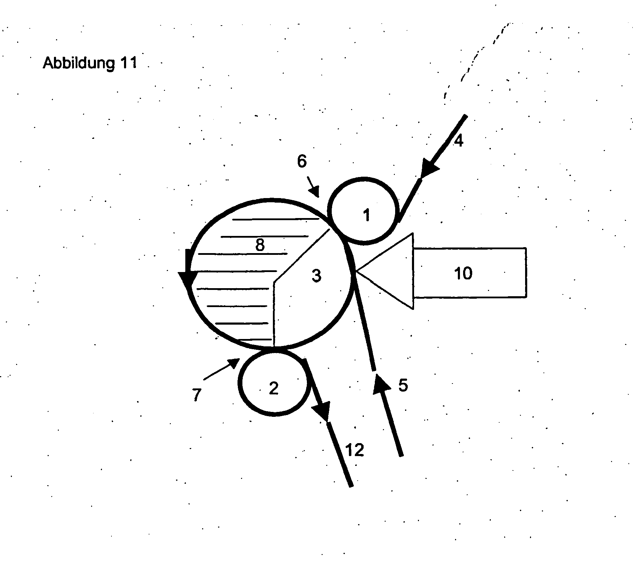

- Abbildung 11:: Flächenkalander mit Auftragungseinrichtung (10) zur Beschichtung zwischen den Trägerbahnen.

Das erfindungsgemäße Kalander besteht damit in der einfachsten Ausführungsform (Abbildung 6) aus drei Walzen und zwei Trägerbahnen bzw. zu kalandrierenden Materialien. Die Trägerbahnen (4, 5) werden über die Zuführwalze (1) durch den Walzenspalt (6) zwischen Zuführwalze (1) und der Kontaktwalze (3) geführt. Die Trägerbahnen werden nun um die Kontaktwalze (3) herum durch den Walzenspalt (7) zwischen der Kontaktwalze (3) und der Abführwalze (2) geführt. Sie umschließen die Kontaktwalze (3) in einem bestimmten Kreissegment (8), das durch die Positionierung der Walzen (1, 2, 3) zueinander festgelegt wird. In der in Abbildung 6 dargestellten Ausführungsform umspannt das Kreissegment einen Winkelbereich an der Kontaktwalze von >180°.

Die Trägerbahnen erfahren damit im ersten Spalt (6) und zweiten Spalt (7) einen Walzentinienkontakt und zusätzlich über das umspannte Kreissegment (8) (Zylinderflächensegment) der Kontaktwalze (3) einen flächigen Walzenkontakt.

Die Trägerbahnen werden zwischen den Walzen (1) und (3) sowie (2) und (3) linienkalandriert/laminiert und zusätzlich über dem Umschlingungsbogen (8) der Kontaktwalze flächenkalandriert/laminiert. Das fertig behandelte Produkt (12) kann anschließend weiter verarbeitet werden.

Abbildung 6, 7 und 8 verdeutlicht die Anordnungsmöglichkeiten der Walzen (1, 2, 3), um verschiedene Umschlingungssegmente, Winkelbereiche (8) der mit den Trägerbahnen (4, 5) umschlungenen Kontaktwalzenfläche zu erzeugen. Es lassen sich Kreissegmente mit einem Winkelbereich zwischen 5° und 355°, je nach Walzendurchmesser, einstellen. Bevorzugt sind Kontaktflächen, d.h. Winkelbereiche zwischen 90° und 270°, insbesondere Winkelbereiche über 180° und besonders bevorzugt ist ein Winkel von 210°.
In weiteren Ausführungsformen kann über die Walzenanordnung der Spalt zwischen der Zuführwalze (1) und der Kontaktwalze (3) und/oder der Spalt zwischen der Abführwalze (2) und der Kontaktwalze (3) beliebig variiert werden, so dass im Extremfall kein Linienkontakt im Walzenspalt (6) und/oder (7) erfolgt. Abbildung 9 skizziert diese Ausführungsform des erfindungsgemäßen Flächenkalanders, indem im Spalt (6) kein Linienkontakt und im Spalt (7) Linienkontakt hergestellt wird.

Die weiteren Einflussfaktoren beim erfindungsgemäßen Kalander sind identisch zu denen eines herkömmlichen Kalanderwerks. D.h. Spalt- oder Spaltdruckeinstellung, Vortemperierung der Laminatbestandteile, Walzenoberfläche etc. Ein zusätzlicher entscheidender Einflussfaktor ist beim erfindungsgemäßen Kalander aber die durch die Bahnführung um die Kontaktwalze (3) im Laminat hervorgerufenen senkrecht zur Bahnspannung/Zugspannung wirkenden Kräfte, die den Radialkräften an der Walze (3) entsprechen, die in ihrer Größe durch die Bahnspannung/Zugspannung im Laminat bestimmt werden.

Die erzeugte Bahnspannung in den Trägerbahnen stellt nicht wie bei den herkömmlichen Kalandern und Kalandrierverfahren nur den Reckgrad des Laminats beim Kaschieren und eine faltenfreie Kaschierung sicher, sondern bestimmt auch die Flächenpressung am Kreissegment (8) beim Kaschiervorgang. Die Zugspannung im Laminat erzeugt an der Kontaktwalze (3) Radialkräfte, die im Laminat senkrecht zu den Zugkräften und nicht linienförmig sondern flächig auf das Laminat wirken. Somit entsteht eine Flächenpressung in Abhängigkeit von der Bahnspannung und dem Zylinderflächensegment (8). Es entsteht abhängig von der Bahngeschwindigkeit eine Wirkzeit des Kalanderns. Die von der Bahnspannung zusätzlich erzeugten Radialkräfte im Kontaktbereich bestimmen den Laminier-, Kaschiervorgang, der beim Linienkontakt nur durch die Kräfte (Druck, Spaltgröße) zwischen zwei Walzen beeinflusst wird. Bei einem Linienkontakt kann die Bahnspannung keine Radialkräfte erzeugen. Durch diesen zusätzlichen Parameter lässt sich beispielsweise die Eindringtiefe (Penetration) eines mit Fluid beschichteten offenen Träger, wie Pflastermaterialien, non-wovens etc., sicherer steuern. Eine ungewünschte vollständige Penetration des Fluides durch den Träger kann somit vermieden werden. Die Verankerung und der Verbund des aushärtenden Fluides mit einem oder mehreren Trägern kann maßgeblich beeinflusst werden.

Beim erfindungsgemäßen Flächenkalander erfolgt die Laminierung, Kaschierung durch den Flächenkontakt und erzeugt somit eine längere Kontaktzeit der zu behandelnden Materialien, Trägerbahnen. Die Zugspannung im Träger, Laminat ist eine durch diese Technik zusätzlich erzeugte Einflussgröße für die Laminierung, Kaschierung. Die Zugspannung erzeugt Radialkräfte zur Kontaktwalze, die während des gesamten Laminier, Kaschiervorgangs wirken. Offene Träger, wie Pflaster-, Gewebematerialien, können somit schonender laminiert, kaschiert werden und Klebemassendurchschläge, wie sie insbesondere bei der Pflasterherstellung auftreten können, werden vermieden. Im Gegensatz zu den herkömmlichen Linienkontaktverfahren, bei denen eine kurzzeitige und hohe Kraft bzw. Druckeinwirkung entsteht, erfolgt beim Flächenkalander eine geringere Kraft- bzw. Druckeinwirkung auf den Träger über einen längeren Kontaktzeitraum.
Bei dehnungsfähigen Trägermaterialien ist auch ein Recken des Materials durch das Flächenkalandrieren möglich. Im Unterschied zu den Linienkontaktverfahren kann der gewünschte Reckendzustand durch die erfindungsgemäße Kalanderanordnung besser stabilisiert, d.h. eingefroren werden.

Der Flächenkontakt ermöglicht zudem eine bessere Temperierung des Laminates über die Walzen. Durch die Temperierung während des Kaschiervorganges kann der gewünschte Zustand zusätzlich stabilisiert werden bevor das Laminat wieder freigegeben wird. Die Temperierung während des Kaschierens ist damit ein weiterer zusätzlicher Einflussfaktor gegenüber den herkömmlichen Linienkalander und Kalanderverfahren. Die Temperierung vor, während und nach dem Kaschieren kann auch mit gängigen Vorrichtungen, IR-Heizung, Heißluftblasen, verschiedene Elektroheizelemente, durchgeführt werden. Die Temperiervorrichtungen zur Temperierung können an und/oder in der Kontaktwalze (3) angebracht sein.

Das Kalanderwerk kann zusätzlich mit Umlenkwalzen (11) bestückt sein, wie sie aus den bekannten Kalandern des Standes der Technik bekannt sind, wie es in Abbildung 10 verdeutlicht wird. Weiterhin kann ein Kalanderwerk aus mehreren erfindungsgemäßen Flächenkalandern und/oder bekannten Linienkalandern bestehen.
Die Zuführ- (1) und/oder Abführwalzen (2) können weiterhin über Kompensationszylinder, mit/ohne Kolbenhubvorrichtungen ausgestattet sein, so dass eine Spaltkraft- und/oder Spaltgrößeneinstellung möglich ist, wie es beispielsweise aus DE 10010772 C1 bekannt ist. Durch den erfindungsgemäßen Kalander wird je nach zu bearbeitendem Material die Variationsmöglichkeit der Einflussgrößen zielgerecht erhöht. Man kann zwei Linien- und ein Flächenkontaktkalander, ein Linien- und ein Flächenkontaktkalander und/oder nur ein Flächenkontaktkalander kombinieren und somit individuelle Kalanderverfahren mit spezifischen Bearbeitungsparametern generieren.

Bei Einsatz eines aushärtenden Fluides als Laminatbestandteil, wie z.B. einer hotmelt-Haftklebemasse, kann mittels des erfindungsgemäßen Flächenkalanders das Beschichten, Flächenlaminieren auch auf der Fluidbeschichtungswalze (3) erfolgen, wie in Abbildung 11 verdeutlicht wird. Die Trägerbahnen (4, 5) werden über die Zuführwalze (1) an die Kontaktwalze (3), hier auch die Beschichtungswalze, geführt. Vor dem Kontaktspalt wird das Beschichtungsmaterial, ein z.B. hotmelt Fluid, zwischen die Trägerbahnen aufgetragen. Der Auftrag des Fluides kann durch einen Beschichtungskopf, z.B. Düse, oder auch aus einem Fluidbad, über ein Walzenauftragswerk sowie durch Sprühtechnologie erfolgen (10). Die Beschichtung und Laminierung erfolgt über die Kontaktfläche (8) der Kontaktwalze (3) bevor das laminierte Produkt über die Abführwalze (2) abgeführt wird.
Entsprechend der "against roll Beschichtung" liegt der Träger beim Beschichten an der Kontaktwalze an. Es erfolgt eine Beschichtung gegen die Kontaktwalze (3). Wenn der Träger "off roll" beschichtet wird, wird der Beschichtungskopf unterhalb Walzenmitte eingestellt, so dass zwischen Beschichtungskopf und Kontaktwalze ein größere Abstand besteht und das Beschichtungsmaterial Ausweichmöglichkeiten besitzt.

Der erfindungsgemäße Flächenkalander und das Kalandrierverfahren ermöglicht durch die dargestellten Kombinationsmöglichkeiten und Bearbeitungsverfahren letztendlich auch höhere Prozeßgeschwindigkeiten und es können rieben den beschriebenen Vorteilen noch Prozeßenergie und Anlageninvestitionskosten in hohem Maße eingespart werden.

Der Flächenkalander kann für verschiedenste Kaschierprozesse/Laminate zur Anwendung kommen. Die Laminatkomponenten können bahnförmig, netzbahnförmige Trägerbahnen und/oder auch mit reaktiv-, thermisch- oder druckaushärtende Fluiden beschichtet sein oder beschichtet werden. Die Fluide auf einer bahnförmigen Struktur können vollflächig oder partiell aufgetragen sein. Bei partiellem Auftrag ist eine dauerhafte Verformung des Auftrags durch das Flächenkalander aufgrund der Temperierung und Einwirkzeit erreichbar, die mit einem Linien-Kalanderwerk nicht möglich ist. Gleiches gilt für das Kaschieren einer verformbaren Netzstrukturbahn. Mit dem Flächenkalander können Oberflächengüte und -gestalt von Laminaten oder Laminatbestandteilen maßgeblich beeinflusst werden.

Auf dem medicalen Sektor stellen sich besondere Anforderungen an die zu laminierenden Trägermaterialien. Bei den Trägermaterialien kann es sich um offene Träger, Vlies, Gewebe, Schaumstoffe oder sog. non-wovens handeln. Die Materialien müssen hautverträglich, in der Regel luft- und/oder wasserdampfdurchlässig sowie gut anmodellierbar und anschmiegsam sein. Mit dem erfindungsgemäßen Flächenkalander kann der Anwender die gewünschten Bearbeitungseigenschaften spezifisch einstellen.

## Patentansprüche

1. Flächenkalander zur Behandlung von mindestens zwei Trägerbahnen (4, 5) umfassend mindestens eine Trägerbahnzuführwalze (1), eine Trägerbahnabführwalze (2) und eine Kontaktwalze (3), wobei die zwei Trägerbahnen (4, 5) durch einen ersten Spalt (6), gebildet zwischen der Trägerbahnzuführwalze (1) und der Kontaktwalze (3), um die Kontaktwalze (3) herum durch einen zweiten Spalt (7), gebildet zwischen der Kontaktwalze (3) und der Trägerbahnabführwalze (2), geführt werden, **dadurch** gekenzeichnet, dass der erste Spalt (6) und/oder der zweite Spalt (7) über die Walzenposition der Trägerbahnzuführwalze (1) und/oder Trägerbahnabführwalze (2) derart veränderbar sind, dass es im ersten Spalt (6) und/oder zweiten Spalt (7) zu einem Linienkontakt oder zu keinem Linienkontakt der zu behandelnden Trägerbahnen kommt und die Trägerbahnzuführwalze (1) und/oder Trägerbahnabführwalze (2) so angeordnet sind, dass ein flächiger Kontakt der Trägerbahnen (4, 5) mit der Kontaktwalze (3) resultiert.

2. Flächenkalander nach Anspruch 1, **dadurch gekennzeichnet, dass** die Trägerbahnzuführwalze (1), Trägerbahnabführwalze (2) und Kontaktwalze (3) so angeordnet sind, dass das von den Trägerbahnen (4, 5) umspannte Kreissegment (8) der Kontaktwalze (3) einen Winkelbereich von 5° bis 355° umspannt.

3. Flächenkalander nach Anspruch 2, **dadurch gekennzeichnet, dass** der Winkelbereich zwischen 90° und 270°, insbesondere zwischen 180° und 355° liegt und insbesondere 210° beträgt.

4. Flächenkalander nach einem der vorstehenden Ansprüche, **dadurch gekennzeichnet, dass** die Trägerbahnzuführ- (1) und/oder Trägerbahnabführwalze (2) Kompensationszylinder mit oder ohne Kolbenhubvorrichtungen zur Spaltkraft- und/oder Spaltgrößeneinstellung aufweisen.

5. Flächenkalander nach einem der vorstehenden Ansprüche, **dadurch gekennzeichnet, dass** zusätzlich Umlenkwalzen (11) vor der Trägerbahnzuführwalze (1) und/oder nach der Trägerbahnabführwalze (2) angeordnet sind,

6. Flächenkalander nach einem der vorstehenden Ansprüche, **dadurch gekennzeichnet, dass** es sich um bahnförmige oder netzbahnförmige Trägerbahnen (4, 5) und/oder mit reaktiv-, thermisch- oder druckaushärtende Fluiden beschichtete Trägerbahnen handelt, wobei die Fluide auf einer bahnförmigen Struktur vollflächig oder partiell aufgetragen sind.

7. Flächenkalander nach einem der Ansprüche 1 bis 5, **dadurch gekennzeichnet, dass** zusätzlich das Beschichten oder Flächenlaminieren einer der Trägerbahnen (4) mit einem Fluid vor dem ersten Spalt (6) auf der Kontaktwalze (3) erfolgt.

8. Flächenkalander nach Anspruch 7, **dadurch gekennzeichnet, dass** der Auftrag des Fluides durch einen Beschichtungskopf, eine Düse oder auch aus einem Fluidbad, über ein Walzenauftragswerk oder durch Sprühtechnologie (10) erfolgt.

9. Flächenkalander nach einem der vorstehenden Ansprüche, **dadurch gekennzeichnet, dass** Temperiervorrichtungen zur Temperierung an und/oder in der Kontaktwalze (3) angebracht sind.

10. Verwendung des Flächenkalander nach Anspruch 1 bis 9 zum kaschieren und/oder laminieren von bahnförmigen oder netzbahnförmigen Trägermaterialien.

11. Verwendung des Flächenkalander nach Anspruch 1 bis 9 zur Laminierung oder Kaschierung von offenen Trägermaterialien, Gewebe, Vlies, Folien, non-wovens oder Schaumstoffe.

12. Verwendung des Flächenkalander nach Anspruch 6 oder 7 zur Laminierung von mit hotmelt-Selbstklebemassen beschichteten Verbandstoffen.

13. Verwendung des Flächenkalander nach Anspruch 6 oder 7 zur Laminierung von mit hotmelt-Selbstklebemassen beschichteten Varkleidungsstoffen.

14. Verwendung des Flächenkalander nach Anspruch 13 zur Herstellung von Kraftfahrzeug-Innenausstattungen, Sitzbezügen und/oder Mäbelverkleidungen.

15. Flächenkalanderverfahren zur Behandlung von mindestens zwei Trägerbahnen (4, 5), wobei die zwei Trägerbahnen (4, 5) durch einen ersten Spalt (6), gebildet zwischen der Trägerbahnzuführwalze (1) und der Kontaktwalze (3), um die Kontaktwalze (3) herum durch einen zweiten Spalt (7), gebildet zwischen der Kontaktwalze (3) und der Trägerbahnabführwalze (2), geführt werden, **dadurch gekennzeichnet, dass** der erste Spalt (6) und/oder der zweite Spalt (7) über die Walzenposition der Trägerbahnzurführwalze (1) und/oder Trägerbahnabführwalze (2) derart veränderbar sind, dass es im ersten Spalt (6) und/oder zweiten Spalt (7) zu einem Linienkontakt oder zu keinem Linienkontakt der zu behandelnden Trägerbahnen kommt und die Trägerbahnzuführwalze (1) und/oder Trägerbahnabführwalze (2) so angeordnet sind, dass ein flächiger Kontakt der Trägerbahnen (4, 5) mit der Kontaktwalze (3) resultiert, so dass das von den Trägerbahnen (4, 5) umspannte Kreissegment (8) der Kontaktwalze (3) einen Winkelbereich von 5° bis 355° umspannt.

16. Flächenkalanderverfahren nach Anspruch 15, **dadurch gekennzeichnet, dass** über die Bahnspannung/Zugspannung der Trägerbahnen (4, 5,12) Kräfte in den Trägerbahnen an der Kontaktwalze (3) erzeugt werden um den Kaschier-/ Laminiervorgang zu beeinflussen.

17. Verfahren nach Anspruch 15 und 16 zur flächigen Laminierung oder Kaschierung von Trägermaterialien, Gewebe, Vlies, Folien oder mit hotmelt-Selbstklebemassen beschichteten Verbandstoffen und Verkleidungsstoffen.

## Claims

1. Surface calender for treating at least two carrier webs (4, 5), comprising at least one carrier web feed roll (1) , a carrier web takeoff roll (2) and a contact roll (3), the two carrier webs (4, 5) being passed through a first nip (6), formed between the carrier web feed roll (1) and the contact roll (3), around the contact roll (3), through a second nip (7), formed between the contact roll (3) and the carrier web takeoff roll (2), **characterized in that** the first nip (6) and/or the second nip (7) can be altered via the roll position of the carrier web feed roll (1) and/or carrier web takeoff roll (2), in such a way that in the first nip (6) and/or second nip (7) there is line contact or is not line contact of the carrier webs to be treated, and the carrier web feed roll (1) and/or carrier web takeoff roll (2) are so disposed as to result in surface contact of the carrier webs (4, 5) with the contact roll (3).

2. Surface calender according to Claim 1, **characterized in that** the carrier web feed roll (1), carrier web takeoff roll (2) and contact roll (3) are so disposed that the circular segment (8) of the contact roll (3) that is spanned by the carrier webs (4, 5) spans an angular range of 5° to 355°.

3. Surface calender according to Claim 2, **characterized in that** the angular range is between 90° and 270°, in particular between 180° and 355°, and in particular is 210°.

4. Surface calender according to any of the preceding claims, **characterized in that** the carrier web feed roll (1) and/or carrier web takeoff roll (2) have compensation cylinders with or without reciprocating piston devices for nip force adjustment and/or nip size adjustment.

5. Surface calenders according to any of the preceding claims, **characterized in that** deflection rolls (11) are additionally disposed ahead of the carrier web feed roll (1) and/or after the carrier web takeoff roll (2).

6. Surface calender according to any of the preceding claims, **characterized in that** the carrier webs (4, 5) are web-form or net-web-form carrier webs (4, 5) and/or carrier webs coated with reactively curing, thermally curing or pressure-curing fluids, the fluids having been applied partially or over the full area to a web-form structure.

7. Surface calender according to any of Claims 1 to 5, **characterized in that** additionally the coating or surface lamination of one of the carrier webs (4) takes place with a fluid ahead of the first nip (6) on the contact roll (3).

8. Surface calender according to Claim 7, **characterized in that** the application of the fluid takes place by means of a coating head, a nozzle or else from a fluid bath, via a roll applicator mechanism or by means of spraying technology (10).

9. Surface calender according to any of the preceding claims, **characterized in that** thermal conditioning devices are mounted for thermal conditioning on and/or in the contact roll (3).

10. Use of the surface calender according to Claim 1 to 9 for laminating and/or cladding web-form or net-web-form carrier materials.

11. Use of the surface calender according to Claim 1 to 9 for cladding or laminating open carrier materials, woven fabric, fleece, films, non-wovens or foams.

12. Use of the surface calender according to Claim 6 or 7 for laminating bandaging materials coated with self-adhesive hotmelts.

13. Use of the surface calender according to Claim 6 or 7 for laminating lining materials coated with self-adhesive hotmelts.

14. Use of the surface calender according to Claim 13 for producing automotive interior equipment, seat coverings and/or furniture linings.

15. Surface calender method for treating at least two carrier webs (4, 5), the two carrier webs (4, 5) being passed through a first nip (6), formed between the carrier web feed roll (1) and the contact roll (3), around the contact roll (3), through a second nip (7), formed between the contact roll (3) and the carrier web takeoff roll (2), **characterized in that** the first nip (6) and/or the second nip (7) can be altered via the roll position of the carrier web feed roll (1) and/or carrier web takeoff roll (2), in such a way that in the first nip (6) and/or second nip (7) there is line contact or is not line contact of the carrier webs to be treated, and the carrier web feed roll (1) and/or carrier web takeoff roll (2) are so disposed as to result in surface contact of the carrier webs (4, 5) with the contact roll (3), and so the circular segment (8) of the contact roll (3) that is spanned by the carrier webs (4, 5) spans an angular range of 5° to 355°.

16. Surface calender method according to Claim 15, **characterized in that**, via the web tension/pulling tension of the carrier webs (4, 5, 12), forces are generated in the carrier webs at the contact roll (3) in order to influence the laminating/cladding operation.

17. Method according to Claim 15 and 16 for surface-laminating or surface-cladding carrier materials, woven fabric, fleece, films or lining materials and bandaging materials coating with self-adhesive hotmelts.

## Revendications

1. Calandre de surface pour le traitement d'au moins deux bandes de support (4, 5), comprenant au moins un rouleau d'alimentation de bande de support (1) ; un rouleau d'évacuation de bande de support (2) et un rouleau de contact (3), les deux bandes de support (4, 5) étant guidées à travers une première fente (6) formée entre le rouleau d'alimentation de bande de support (1) et le rouleau de contact (3), autour du rouleau de contact (3) à travers une deuxième fente (7), formée entre le rouleau de contact (3) et le rouleau d'évacuation de bande de support (2), **caractérisée en ce que** la première fente (6) et/ou la deuxième fente (7) peuvent être modifiées par le biais de la position de rouleau du rouleau d'alimentation de bande de support (1) et/ou du rouleau d'évacuation de bande de support (2) de telle sorte qu'il se produise un contact linéaire dans la première fente (6) et/ou dans la deuxième fente (7), ou qu'il ne se produise aucun contact linéaire des bandes de support à traiter, et le rouleau d'alimentation de bande de support (1) et/ou le rouleau d'évacuation de bande de support (2) sont disposés de telle sorte qu'il en résulte un contact plan des bandes de support (4, 5) avec le rouleau de contact (3).

2. Calandre de surface selon la revendication 1, **caractérisée en ce que** le rouleau d'alimentation de bande de support (1), le rouleau d'évacuation de bande de support (2) et le rouleau de contact (3) sont disposés de telle sorte que le segment de cercle (8) du rouleau de contact (3) couvert par les bandes de support (4, 5) couvre une plage angulaire de 5° à 355°.

3. Calandre de surface selon la revendication 2, **caractérisée en ce que** la plage angulaire est comprise entre 90° et 270°, en particulier entre 180° et 355°, et vaut notamment 210°.

4. Calandre de surface selon l'une quelconque des revendications précédentes, **caractérisée en ce que** le rouleau d'alimentation de bande de support (1), et/ou le rouleau d'évacuation de bande de support (2) présentent de cylindres de compensation avec ou sans dispositifs à course de piston pour l'ajustement de la force et/ou de la taille de la fente.

5. Calandre de surface selon l'une quelconque des revendications précédentes, **caractérisée en ce que** des rouleaux de déflection (11) sont en outre disposés avant le rouleau d'alimentation de bande de support (1) et/ou après le rouleau d'évacuation de bande de support (2).

6. Calandre de surface selon l'une quelconque des revendications précédentes, **caractérisée en ce qu'**il s'agit de bandes de support (4, 5) en forme de bande ou en forme de bande en filet et/ou de bandes de support enduites de fluides durcissant par réaction ou thermiquement ou par pression, les fluides étant appliqués complètement ou partiellement sur une structure en forme de bande.

7. Calandre de surface selon l'une quelconque des revendications 1 à 5, **caractérisée en ce qu'**en outre le revêtement ou le laminage à plat d'une des bandes de support (4) s'effectue avec un fluide avant la première fente (6) sur le rouleau de contact (3).

8. Calandre de surface selon la revendication 7, **caractérisée en ce que** l'application du fluide s'effectue par une tête de revêtement, une buse ou aussi à partir d'un bain de fluide, par le biais d'un dispositif d'enduction à rouleaux ou par une technique de pulvérisation (10).

9. Calandre de surface selon l'une quelconque des revendications précédentes, **caractérisée en ce que** des dispositifs de mise en température sont montés pour la mise en température sur et/ou dans le rouleau de contact (3).

10. Utilisation de la calandre de surface selon les revendications 1 à 9, pour le contrecollage et/ou le laminage de matériaux de support en forme de bande ou en forme de bande en filet.

11. Utilisation de la calandre de surface selon les revendications 1 à 9, pour le contrecollage et/ou le laminage de matériaux de support ouverts, de tissus, de voiles, de feuilles, de non tissés ou de mousses.

12. Utilisation de la calandre de surface selon la revendication 6 ou 7 pour le laminage de matières de bandage revêtues de compositions auto-adhésives thermofusibles.

13. Utilisation de la calandre de surface selon la revendication 6 ou 7 pour le laminage de matières d'habillage revêtues de compositions auto-adhésives thermofusibles.

14. Utilisation de la calandre de surface selon la revendication 13 pour la fabrication d'équipements internes de véhicules automobiles, de revêtements de sièges et/ou d'habillages de meubles.

15. Procédé de calandrage de surface pour le traitement d'au moins deux bandes de support (4, 5), les deux bandes de support (4, 5) étant guidées à travers une première fente (6) formée entre le rouleau d'alimentation de bande de support (1) et le rouleau de contact (3), autour du rouleau de contact (3) à travers une deuxième fente (7), formée entre le rouleau de contact (3) et le rouleau d'évacuation de bande de support (2), **caractérisé en ce que** la première fente (6) et/ou la deuxième fente (7) peuvent être modifiées par le biais de la position de rouleau du rouleau d'alimentation de bande de support (1) et/ou du rouleau d'évacuation de bande de support (2) de telle sorte qu'il se produise un contact linéaire dans la première fente (6) et/ou dans la deuxième fente (7), ou qu'il ne se produise aucun contact linéaire des bandes de support à traiter, et le rouleau d'alimentation de bande de support (1) et/ou le rouleau d'évacuation de bande de support (2) sont disposés de telle sorte qu'il en résulte un contact plan des bandes de support (4, 5) avec le rouleau de contact (3), de sorte que le segment de cercle (8) du rouleau de contact (3) couvert par les bandes de support (4, 5) couvre une plage angulaire de 5° à 355°.

16. Procédé de calandrage de surface selon la revendication 15, **caractérisé en ce que** des forces sont produites dans les bandes de support au niveau du rouleau de contact (3) par le biais de la tension de la bande ou de la tension de traction des bandes de support (4, 5, 12), afin d'influencer l'opération de contrecollage ou de laminage.

17. Procédé selon la revendication 15 et la revendication 16, pour le laminage ou le contrecollage de surface de matériaux de support, de tissus, de voiles, de feuilles ou de matières de bandage et de matières d'habillage revêtues de compositions auto-adhésives thermofusibles.
